# EUROPEAN PATENT APPLICATION

(11) **EP 1 618 932 A1**
(43) Date of publication of application: **25.01.2006**
(21) Application number: 04017093.8
(22) Date of filing: 20.07.2004
(51) Int. Cl.: A63F 13/12, H04L 29/06

(54) **Device and method for wireless communication that enables a utilisation of a real world object for a game component in an electronic game**

(71) Applicant: Sony Ericsson Mobile Communications AB, 221 88 Lund (SE)
(72) Inventor: Ögren, Per, 211 34 Malmö (SE)
(74) Representative: Körber, Martin Hans

(57) **Abstract**

An electronic equipment (1) for wireless communication is provided that comprises attribute signal detection means (2, 8, 9) for detecting an attribute signal, which is not perceivable with a human sensory organ, and which is representative of an attribute assigned to a target object. The electronic equipment further comprises attribute verification means (10) for verifying that the attribute represented by an attribute signal detected corresponds to a reference attribute, and attribute indication means (11) for indicating the presence of a verified attribute. Further, a method for registering target objects with an electronic equipment (1) for wireless communication is provided, whereby a target object is only identifiable by means of an attribute signal that is not perceivable with a human sensory organ. The method comprises steps for scanning (S1) for an attribute signal being representative of an attribute assigned to a target object, verifying (S2) that an attribute represented by an attribute signal detected upon scanning corresponds to a reference attribute, and indicating (S3) the presence of a target object corresponding to the attribute verified.

## Description

### TECHNICAL FIELD OF THE INVENTION

The present invention relates to an electronic equipment for wireless communication, and in particular to a respective electronic equipment enabling a localisation of target objects via markings that are not perceivable with a human sensory organ.

### DESCRIPTION OF RELATED ART

Today's electronic equipment for wireless communication like e.g. portable radio communication equipment such as mobile telephones, pagers, or communicators like for instance electronic organisers, smartphones, PDA's (Personal Digital Assistant) or other wireless communication appliances alike, is equipped with a variety of different gadgets for turning the equipment into a multi purpose instrument. Some gadgets concern hardware extensions, like a built-in or attachable camera for taking pictures or recording short movies, a GPS receiver for checking a current position of the electronic equipment or a Bluetooth communication unit allowing to connect to a short range wireless network. Other gadgets concern software extensions providing some entertainment on the electronic equipment like e.g. animations or games.

Particularly the popularity of games is on the increase. Some games are based on SMS (Short Message Service) like for instance quiz games, where you receive and answer each question via SMS. Others, based on the Java platform or the Symbian operating system provide more sophisticated games, which are now comparable to computer games as most modern cell phones are currently equipped with colour screens and polyphonic sounds.

Those types of games typically create a fictitious imaginary world, within which one or more players are allowed to act. If a player e.g. has to find hidden objects in a game, he is restricted to discover these objects within the imaginary world provided by the game itself. An interaction with a real world object in a surrounding of a player is not possible.

It is therefore an object of the present invention to provide an electronic equipment for wireless communication that enables a utilisation of a real world object for a game component in an electronic game being executed on the electronic equipment.

### SUMMARY

The invention is achieved by an electronic equipment for wireless communication and a method for a registration of target objects, both as set out in the appended claims.

The electronic equipment for wireless communication according to the present invention comprises attribute signal detection means for detecting an attribute signal, which is not perceivable with a human sensory organ, and which is representative of an attribute assigned to a target object. The electronic equipment further comprises attribute verification means for verifying that the attribute represented by an attribute signal detected corresponds to a reference attribute, and attribute indication means for indicating the presence of a verified attribute.

It should be noted that the terms 'comprises' and 'comprising' when used in this specification are taken to specify the presence of stated features, integers, steps or components, but do not preclude the presence or addition of one or more other features, integers, steps, components or groups thereof.

The present invention further comprises a method for registering target objects with an electronic equipment for wireless communication, whereby a target object is only identifiable by means of an attribute signal that is not perceivable with a human sensory organ. The method comprises steps for scanning for an attribute signal being representative of an attribute assigned to a target object, verifying that an attribute represented by an attribute signal detected upon scanning corresponds to a reference attribute, and indicating the presence of a target object corresponding to the attribute verified.

The object of the present invention is further achieved by a computer program product for use on an electronic equipment for wireless communication that comprises a series of state elements representing data, which are adapted to be processed by a data processing means of the electronic equipment, and at least part of the data form instructions that cause the processing means to execute a method according to the present invention on the electronic equipment.

The present invention enables an integration of selected real world objects into a game component even if the marking of a respective target object is not perceivable through means of a human sensory organ.

Further developments are set forth in the dependent claims.

By implementing the electronic equipment in form of a mobile radio terminal, the integration of real world target objects into components is also achieved for games executable on common consumer products in cellular radio networks.

The method for a registration of target objects preferably comprises a step for displaying a graphical representation indicative of the verified attribute thus enabling an information of a player that a target object has been identified by means of an optical indication. The electronic equipment hereto advantageously comprises displaying means for displaying a graphical representation indicative of the verified attribute.

In a preferred embodiment of the present invention, the attribute signal detection means comprises an optical image registration means having a light sensitivity extending into the non-visible spectral range. A respective optical image registration means, like e.g. a camera allows the detection of optical markings that are only visible in the infrared or ultra-violet light spectrum. The scanning for an attribute signal hereto advantageously comprises a step for recording an image with an optical image registration means of the electronic equipment, whereby the image recording shows a sensitivity for light in the non-visible spectral range.

To receive an electronic marking from a target object or an electronic marking related to a target object, the scanning for an attribute signal preferably comprises a step for establishing of a short range wireless communication link. The electronic equipment is hereto advantageously provided with a short range wireless communication means, whereby a Bluetooth communication means is preferably used in order to implement the scanning for an electronic marking or attribute, respectively, based on a standardised Ad-Hoc network technology

Alternatively or additionally, the scanning for an attribute signal further advantageously comprises a request for attribute information via a wireless communication network system.

As the position of a player may be required in the course of a game making reference to real world objects, the electronic equipment advantageously comprises a position determination means based on GPS (Global Positioning System) and/or a wireless communication network system like for instance a cellular communication network for allowing to determine the position of a player using the electronic equipment.

Upon an attribute signal being formed by a marking which is only discernible in the non-visible spectral range of light, the step for verifying an attribute advantageously includes a pattern recognition for identifying the marking from its image obtained with an optical image registration means that forms part of the attribute verification means.

The attribute indication means preferably comprises a relative distance determination means for determining a relative distance between a current position of the electronic equipment and a position related to position information concerning the target object, thus providing information about a users, i.e. players position in relation to a target object location. Additionally or alternatively, the attribute indication means comprises a movement direction determination means for determining the direction of a movement of the electronic equipment with respect to a target object, thus allowing to evaluate an approach of a player to the target object. In a further preferred embodiment of the present invention, the attribute indication means comprises a decision means for providing an indication signal based on a relative distance determined by the relative distance determination means and/or on a movement direction determined by the movement direction determination means.

Likewise, the method for a registration of target objects comprises a step for determining a relative distance between a current position of the electronic equipment and a position related to information concerning a target object. Additionally or alternatively, the method comprises a step for determining the direction of a movement of the electronic equipment with respect to a target object. Further, the method advantageously comprises a step for deciding that a relative distance determined between a current position of the electronic equipment and a position related to information concerning a target object falls below a threshold distance value and/or a direction of movement determined with respect to a target object falls within a defined range of directions, thus enabling an assessment of a player approaching a target object as required by a game.

Suitably, the electronic equipment further comprises a messaging means for transmitting a message comprising image data obtained by the optical image registration means. A respective message may e.g. be used by player of a game to transmit an image of a target object to a supervising authority like a key player, a game server or the like in order to provide evidence of the discovery of a target object.

### BRIEF DESCRIPTION OF THE DRAWINGS

In the following description, the present invention is explained in more detail with respect to special embodiments and in relation to the enclosed drawings, in which
- Figure 1: shows a block diagram of an electronic equipment according to the present invention, and
- Figure 2: shows the basic steps of a method according to the present invention in a flowchart representation.

### DETAILED DESCRIPTION OF EMBODIMENT

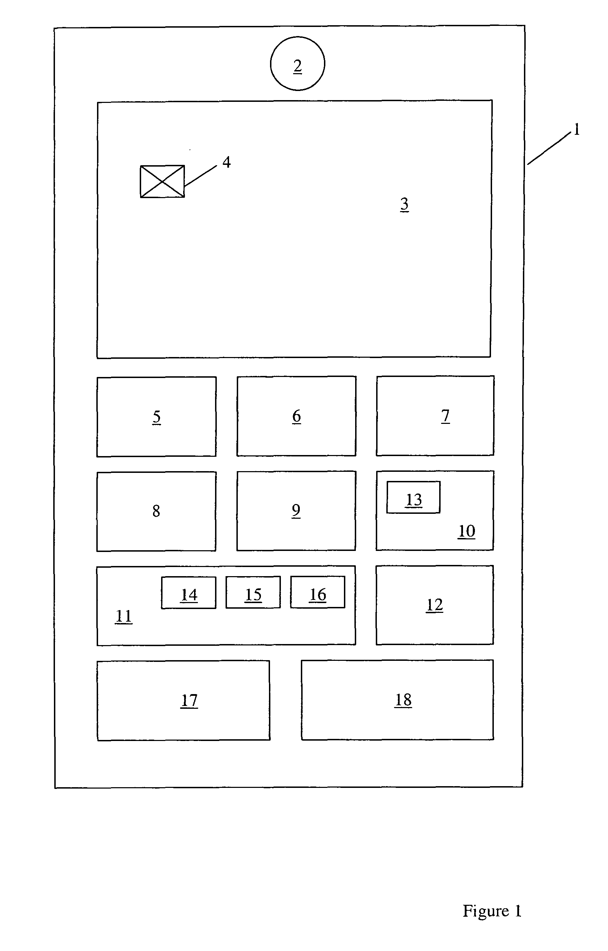

An electronic equipment 1 for wireless communication according to the present invention is shown in form of a block diagram representation in Figure 1. The electronic equipment 1 can be a portable radio communication equipment such as a cellular mobile terminal or mobile telephone, respectively, a pager or any other type of communicator like for instance an electronic organiser, a smartphone, a PDA or other wireless communication appliance alike. Particularly, when being implemented as a mobile telephone forming a mobile terminal for wireless cellular communication networks, an electronic equipment 1 according to the present invention provides allows the playing of games which make reference to real world objects on a very common consumer product.

The electronic equipment 1 is adapted to receive attribute signals, which can not be perceived with a sensory organ of a human being. Hereto an attribute signal detection means is provided, which is composed of one or more components, whereby each component is specialised for a certain type of signal transmission.

An attribute as understood in the context of this specification defines a feature or quality that belongs to or is assigned to a target object, i.e. a real world object being referred to in a game running on the electronic equipment 1. An attribute signal denotes any kind of a signal, that serves to convey information concerning an attribute. An electronic equipment 1 according to the present invention is adapted to receive attribute signals which are transmitted based on light and/or based on radio waves.

For receiving attribute signals based on light emission or reflection, the electronic equipment is provided with an optical image registration means 2, preferably a camera unit for taking stills or movie clips. The sensitivity of the camera 2 extends beyond the visible light spectrum for a registration of objects which are only visible in the infrared or in the ultra-violet spectral range. Thus it is possible to provide a target object with a marking, that is not visible to a human eye. For discovering the target object via its marking, a player is required to use the camera 2 in combination with the viewfinder 3,which unlike in traditional cameras used for exposing light sensitive films is formed by a digital display screen.

The optical registration means 2 may further include a photodetector, e.g. an infrared photodiode or the like for converting an attribute signal in form of a modulated light signal into a modulated electrical signal. Alternatively, the light converting elements of a camera may be used instead of an additional photodetector.

For receiving attribute signals based on radio waves, the attribute signal detection means includes either a short range wireless communication means 9 or makes use of its main wireless communication means 8. Preferably, the attribute signal detection means combines both communication means 8 and 9. The main wireless communication means 8 is the standard communication means used for linking with a wireless network communication system like e.g. a cellular phone network. A short range wireless communication means 9 like for instance a Bluetooth or a UWB (Ultra Wide Band) communication system provides a data exchange only over a short transmission path length of around 10 meter. It is adapted to automatically link to a nearby communication system of the same kind for exchanging data.

The optical image registration means 2 as well as the short range 9 and the main 8 wireless communication means, each form just one component of the attribute signal detection means.

For an input of control commands or data by a user, the electronic equipment 1 provides an input means 5 for instance in form of a keypad, which may be supplemented by a voice control and/or other types of input facilities like e.g. a jogdial or a touchsensitive screen. A processing means 6 forms the control unit of the electronic equipment. A storage means 7 serves as a storage for data and programs, which are used to operate the electronic equipment 1 and others, which are produced during its operation. The storage means can e.g. be formed by a ROM (Read Only Memory), a microdrive (small volume hard disk), a volatile or non volatile RAM (Random Access Memory) or a combination of two or more storage means of such kind.

An attribute verification means 10 formed in the electronic equipment 1 provides the functionality for verifying that an attribute represented by an attribute signal detected by one of the attribute signal detection means corresponds to a reference attribute. Upon a positive verification, the attribute indication means 11 produces an indication signal for announcing the presence of a verified attribute. The indication signal can result in an acoustic announcement, a graphical information in form of text or in form of an icon, or in a control signal supplied to the processing means. When a target object is discovered and verified, a respective control.signal is preferably processed by the game running on the electronic equipment 1 to present an icon on the display screen as a confirmation of a successful discovery of a target object.

A knowledge about a current position of a player is very useful when e.g. providing assistance in a discovery of a target object. Usually the position of the electronic equipment 1 on which a player runs the game is used for identifying a players position. The electronic equipment 1 hereto includes a position determination means 12 providing information about a current location of a player. Preferably a GPS (Global Positioning System) receiver is utilised in the position determination means 12 to locate the current position based on satellite navigation. The GPS receiver may further be used for precision timing if e.g. a game requires to synchronise with other players participating in the game. Instead or supplementary, a network based position determination equipment may be employed. A respective equipment utilises applications like e.g. STK (SIM Toolkit) allowing a communication with a location server application.

A confirmation of a target object discovery frequently requires that the player approaches the object up to a certain minimum distance. For evaluating an actual distance, a relative distance determination mean 14 is provided in the electronic equipment 1. In a first embodiment, the relative distance determination means 14 determines a current distance between a player and a target object from a position information provided by the position determination means 12 and position information concerning the target object. The information concerning the position of a target object may be supplied from a list or database located in the storage means 7 of the electronic equipment 1 or from a server of a wireless communication network. But may also be part of an attribute signal which is received directly from a target object.

In the case of an attribute signal being formed by an optical image based on light emitted or reflected from a surface of a target object, the relative distance determination means 14 is formed by a pattern recogniser 13 enabling an examination of an image for characteristic features defining a certain marking. Although the pattern recogniser primarily serves the attribute verification, the verification of a marking is only possible, when the image of the marking obtained by the optical image registration means 2 is big enough to allow its characteristic features being recognised. The pattern recogniser 13 therefore indirectly serves as a component of the relative distance determination means 14.

In a third embodiment, a component of the relative distance determination means 14 is formed by a signal strength evaluation means which uses the strength of a short range wireless communication signal received from a target object to estimate the relative distance.

Particularly for cases, where an optical identification of a target object is not possible, it has to be checked, if a players movement is directed towards the object or if he or she is likely to miss the object. The electronic equipment 1 hereto comprises a movement determination means 15 for determining the direction of a movement of the electronic equipment with respect to the target object. In the most simple case, a movement direction determination is based on the differences of a few or only two of the last positions determined by the position determination means 12. A more sophisticated movement determination means makes use of a gyroscope, e.g. an optical gyroscope based on the Sagniac effect.

The attribute indication means 11 preferably comprises a decision means 16 which provides the indication signal used to announce the presence of a target object. The indication signal itself is derived from a relative distance value supplied by the relative distance determination means 14, and preferably in combination with a movement direction value obtained from the movement direction determination means 15.

To enable an exchange with other players participating in a game or with a possible game authority, like a game server or a particular player acting as a master of the game, the electronic equipment 1 comprises a messaging means 17. For allowing a player to provide proof of a target object being found, the messaging means 17 is adapted for transmitting a message that comprises image data obtained by the optical image registration means 2. A respective message is preferably based on the Multimedia Messaging Standard (MMS) allowing to combine text, audio, and image data in one message, but also other messaging services may be employed, like e.g. email.

Although only elements essential for the understanding of the present invention have been explained for the sake of clarity, it is to be understood that further elements, such as e. g. coding means, modulation means and the like are necessary for the operation of the electronic equipment 1. All these further necessary elements are represented in their totality by the auxiliary means 18.

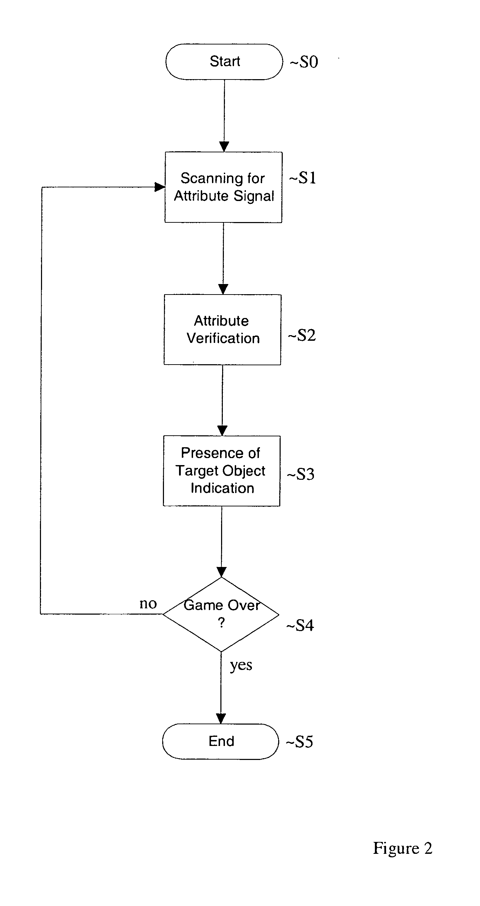

Figure 2 shows a flowchart with the basic steps of a method for a registration of target objects with an electronic equipment according to the present invention. After the method is started in step S0, it is first scanned for attribute signals being representative of an attribute assigned to a target object. When an optical image registration means 2 like a camera on a mobile terminal is used as attribute detection means, the camera is turned on in this step for a continuous or repeated acquisition of images. The thus taken images are then examined by the image pattern recogniser 13 for a presence of a marking.

To avoid that a marking can be detected with the naked eye of a user, all markings show a light emission or reflection behaviour in the infra-red or ultra-violet spectral range only. The optical registration means 2 is adapted to transform light of one or both of these non-visible parts of the light spectrum into image signals. To allow a user to associate the image components resulting from the non-visible light spectrum with objects being visible to him or her, the display screen 3 typically shows both image signal components of the n-visible light spectrum superimposed on the signal components of the visible light spectrum. The pattern recogniser instead preferably uses only the image components of the infra-red and/or ultra-violet spectral range, which allows to reduce the total number of patterns in an image that might interfere with the pattern of a marking to be identified.

Once a marking is identified, the corresponding attribute is verified as belonging to a target object in step S2. The verification is achieved by comparing the identified marking with markings of reference attributes stored in the local storage means 7 or in a storage means, which is accessible by the electronic equipment 1 using its built-in wireless communication means. When a matching marking is found in the list, the corresponding reference attribute is selected. In more general terms, the attribute represented by an attribute signal detected upon scanning is verified by checking that that the detected attribute signal corresponds to a reference attribute signal.

In the next step S3, the presence of the target object corresponding to the verified attribute is indicated to a user of the electronic equipment or a player of the game, respectively. The indication is preferably done visually and/or acoustically. For visualisation, a graphical representation of the target object corresponding to the verified attribute is shown on the display screen 3. An acoustic signal like a beep or a certain tune may further be used to announce that the target object is nearby.

In the following step S4 it is checked if the game is over. If so, the method is brought to an end in step S5, else the method returns to step S1 for further scanning for attribute signals.

An alternative to optical marking of a target object is formed by radio marking. Hereto, the target object is equipped with a short range wireless transmitter operating like a radio beacon, or with a short range wireless communication system like Bluetooth or a UWB-communication system providing an attribute signal. The attribute signal is characteristic for a certain target object or a certain kind of target object. The corresponding attribute, i.e. for instance the target objected being treated as a treasure in the game, is verified by looking up a reference attribute in step S2.

A further alternative for providing an object marking is formed by distributing position information concerning a location of a target object over the wireless communication network system to which the electronic equipment 1 is linked. In step S1 of the method illustrated in Figure 2, the received position information is repeatedly or continuously compared with a current players position that is determined by the position determination means 12 explained above. When the such evaluated relative distance between the player and the target object falls short of a threshold distance value, the object is assumed to be nearby and the method will proceed to step S2 verifying which attribute is referenced by the position information.

But when several objects are close to a player, he might be unable to identify the correct target object. To make sure that a player faces the correct target object, step S 1 further comprises a determination of the players current movement direction using the movement determination means 15 described above. If the movement is directed towards the target object, the player is assumed not only to face it, but having the object in his field of view. The indication of the presence of a target object is now not only based on the relative distance to the object, but also on the condition that the direction of movement falls within a defined range of directions guaranteeing that the target objects gets into the field of view of the player. If the player is close enough and approaches the target object in the right direction, a graphical representation of the attribute assigned to the target object is presented on the display screen.

After discovery, the player may provide a respective evidence by taking a picture or a small video clip of the target object with the optical image registration means 2, and send the image or movie to a game authority for scoring.

The method described is preferably implemented in software for an electronic equipment for wireless communication. Some of the means necessary on an electronic equipment 1 for implementing the method are hardware components like the display screen 3, the camera 2 or the like, others are preferably formed by software as e.g. the image pattern recogniser 13, the attribute verification means 10 or the like, and still other components are implemented as a combination of hardware and software.

### List of Reference signs

- 1: electronic equipment
- 2: optical image registration means
- 3: Display
- 4: graphical representation
- 5: input means
- 6: processing means
- 7: storage means
- 8: communication means for wireless network communication system
- 9: communication means for short range wireless communication means
- 10: attribute verification means
- 11: attribute indication means
- 12: position determination means
- 13: image pattern recogniser
- 14: relative distance determination means
- 15: movement determination means
- 16: decision means
- 17: messaging means
- 18: auxiliary means

- S0: Start
- S1: Scanning step
- S2: Verification step
- S3: Indication step
- S4: Status query
- S5: End

## Claims

1. An electronic equipment (1) for wireless communication comprising:
- attribute signal detection means (2, 8, 9) for detecting an attribute signal that is not perceivable with a human sensory organ and that is representative of an attribute assigned to a target object,
- attribute verification means (10) for verifying that the attribute represented by an attribute signal detected corresponds to a reference attribute, and
- attribute indication means (11) for indicating the presence of a verified attribute.

2. An electronic equipment according to claim 1,
**characterised in**
**that** the electronic equipment (1) is formed by a mobile radio terminal.

3. An electronic equipment according to claim 1 or claim 2,
**characterised in**
**that** the electronic equipment (1) further comprises displaying means (3) for displaying a graphical representation (4) indicative of the verified attribute.

4. An electronic equipment according to claim 1, 2 or 3,
**characterised in**
**that** the attribute signal detection means comprises an optical image registration means (2) having a light sensitivity extending into the non-visible spectral range.

5. An electronic equipment according to one of the claims 1 to 4,
**characterised in**
**that** the attribute signal detection means comprises a short range wireless communication means (9).

6. An electronic equipment according to claim 5,
**characterised in**
**that** the short range wireless communication means (9) is formed by a Bluetooth communication means.

7. An electronic equipment according to one of the claims 1 to 6,
**characterised in**
**that** the electronic equipment (1) further comprises a position determination means (12) based on a GPS.

8. An electronic equipment according to one of the claims 1 to 7,
**characterised in**
**that** the electronic equipment (1) further comprises a position determination means (12) based on a wireless communication network system.

9. An electronic equipment according to one of the claims 1 to 8,
**characterised in**
**that** the attribute verification means (10) comprises an image pattern recogniser (13).

10. An electronic equipment according to one of the claims 1 to 9,
**characterised in**
**that** the attribute indication means (11) comprises a relative distance determination means (14) for determining a relative distance between a current position of the electronic equipment and a position related to position information concerning a target object.

11. An electronic equipment according to one of the claims 1 to 10,
**characterised in**
**that** the attribute indication means (11) comprises a movement direction determination means (15) for determining the direction of a movement of the electronic equipment with respect to a target object.

12. An electronic equipment according to claim 10 or 11,
**characterised in**
**that** the attribute indication means (11) comprises a decision means (16) for providing an indication signal based on a relative distance determined by the relative distance determination means and/or on a movement direction determined by the movement direction determination means.

13. An electronic equipment according to one of the claims 1 to 12,
**characterised in**
**that** the electronic equipment (1) further comprises a messaging means (17) for transmitting a message comprising image data obtained by the optical image registration means.

14. Method for a registration of target objects with an electronic equipment, whereby a target object is only identifiable by means of an attribute signal that is not perceivable by a human sense, the method comprising steps for:
- scanning (S1) for an attribute signal being representative of an attribute assigned to a target object,
- verifying (S2) that an attribute represented by an attribute signal detected upon scanning corresponds to a reference attribute, and
- indicating (S3) the presence of a target object corresponding to the attribute verified.

15. Method according to claim 14,
**characterised in**
**that** the method comprises a step for displaying a graphical representation (4) indicative of the verified attribute.

16. Method according to claim 14 or 15,
**characterised in**
**that** the scanning for an attribute signal comprises a step for recording an image with an optical image registration means (2) of the electronic equipment (1), whereby the image recording shows a sensitivity for light in the non-visible spectral range.

17. Method according to claim 14, 15, or 16,
**characterised in**
**that** the scanning (S1) for an attribute signal comprises a step for establishing of a short range wireless communication link.

18. Method according to one of the claims 14 to 17,
**characterised in**
**that** the scanning (S1) for an attribute signal comprises a request for attribute information via a wireless communication network system.

19. Method according to one of the claims 16 to 18,
**characterised in**
**that** upon the attribute signal being formed by an image of a marking obtained with the optical image registration means (2) in the non-visible spectral range of light, the step (S2) for verifying an attribute includes a pattern recognition for the image of the marking.

20. Method according to one of the claims 14 to 19,
**characterised in**
**that** the method comprises a step for determining a relative distance between a current position of the electronic equipment and a position related to information concerning a target object.

21. Method according to one of the claims 14 to 20,
**characterised in**
**that** the method comprises a step for determining the direction of a movement of the electronic equipment with respect to a target object.

22. Method according to claim 20 or 21,
**characterised in**
**that** the method comprises a step for deciding that a relative distance determined between a current position of the electronic equipment and a position related to information concerning a target object falls below a threshold distance value and/or a direction of movement determined with respect to a target object falls within a defined range of directions.

23. Computer program product for use on an electronic equipment for wireless communication, the computer program product comprising a series of state elements representing data, which are adapted to be processed by a data processing means of the electronic equipment, and at least part of the data form instructions that cause the processing means to execute a method according to one of the claims 14 to 22 on the electronic equipment.
